(19) Europäisches Patentamt
European Patent Office
Office européen des brevets

(11) **EP 2 262 077 A2**

(12) **EUROPEAN PATENT APPLICATION**

(43) Date of publication:
**15.12.2010 Bulletin 2010/50**

(51) Int Cl.:
*H02J 7/35* (2006.01)   *H02J 3/38* (2006.01)
*H02J 13/00* (2006.01)

(21) Application number: **10006137.3**

(22) Date of filing: **14.06.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **12.06.2009 JP 2009140938**

(71) Applicant: **Sharp Kabushiki Kaisha**
**Osaka-shi, Osaka 545-8522 (JP)**

(72) Inventors:
• **Yoneda, Tetsuya**
  **Osaka-shi, Osaka 545-8522 (JP)**
• **Mitate, Takehito**
  **Osaka-shi, Osaka 545-8522 (JP)**
• **Nishimura, Naoto**
  **Osaka-shi, Osaka 545-8522 (JP)**

(74) Representative: **Müller - Hoffmann & Partner**
**Patentanwälte**
**Innere Wiener Strasse 17**
**81667 München (DE)**

(54) **Power operation system, power operation method, photovoltaic power generator and controller**

(57)   A power operation system including a plurality of photovoltaic power generators connected through one same receiving end to an electric power system is provided. Each of the photovoltaic power generators includes a solar cell receiving sunlight and outputting electric power, and a storage battery for storing the electric power. The power operation system includes a limiting unit limiting storage of electric power by a first photovoltaic power generator among the plurality of photovoltaic power generators in a first time period, and limiting storage of electric power by a second photovoltaic power generator among the plurality of photovoltaic power generators in a second time period different from the first time period.

FIG.5

## Description

This nonprovisional application is based on Japanese Patent Application No. 2009-140938 filed with the Japan Patent Office on June 12, 2009, the entire contents of which are hereby incorporated by reference.

BACKGROUND OF THE INVENTION

Field of the Invention

The present invention relates to a technique for operating a photovoltaic power generator including solar cells and a storage battery mounted on a house or the like and, more specifically, to a technique for operating a photovoltaic power generator capable of reverse power flow of electric power generated by the solar cells back to the electric power system.

Description of the Background Art

From the viewpoint of conserving the global environment, use of various energies are reviewed. Solar cells that utilize solar energy are considered promising as a representative source of clean energy. Recently, systems have been developed in which dispersed power sources on the side of solar cells and the commercial power supply on the side of the electric power system are linked, so that if necessary power consumed by a house cannot be fully provided by the solar cells, the shortage is offset by the commercial power supply on the side of the electric power system. Among such systems, some are adapted to realize reverse power flow, to feed excessive power output by solar cells back to the electric power system.

Further, a technique for storing excessive power output by solar cells in a storage battery and using the electric power of the storage battery if necessary power consumed by a house cannot be fully provided by the solar cells has been known. By way of example, Japanese Patent Laying-Open No. 2003-79054 (Patent Document 1) discloses a solar power generation system having a storage battery. According to Japanese Patent Laying-Open No. 2003-79054 (Patent Document 1), a solar power generation system, linked to an electric power system, supplies the power generated at a solar cell device to an inverter device for conversion to AC power and feeds it to a power consuming unit, and the system includes a storage battery for storing power from the solar cell device, and changeover control means for switching output of the power from the solar cell device to the storage battery or to the inverter device. The solar power generation system controls charging of the storage battery such that the battery is charged by at least one selected from the power generated by the solar cell device at a off-peak time of electric demand after sunrise and power from the electric power system at night, and controls discharging of the power stored in the storage battery in accordance with the change curve of electric demand, with the demand high in a specific time zone, so that the power from the battery is applied to the inverter device in addition to the power generated by the solar cell device.

When a plurality of photovoltaic power generators having storage batteries are connected to one receiving end of the electric power system, however, the following problem arises. Specifically, each photovoltaic power generator starts charging immediately after sunrise. Therefore, power is hardly sold through the receiving end of the electric power system in the morning. When the storage battery is fully charged (FULL) in the afternoon, each photovoltaic power generator starts selling power. Therefore, the amount of power sold through the receiving end of the electric power system in the morning is extremely small, while the amount of power sold through the receiving end of the electric power system in the afternoon becomes very large. In other words, the amount of electric power sold at the receiving end of the electric power system fluctuates considerably, so that the state of operation of the power operation system including a plurality of photovoltaic power generators connected to the receiving end of the electric power system becomes unstable.

SUMMARY OF THE INVENTION

The present invention was made to solve such a problem, and its object is to reduce fluctuation in the amount of electric power sold to the electric power system by a plurality of photovoltaic power generators.

According to an aspect, the present invention provides a power operation system including a plurality of photovoltaic power generators connected to an electric power system through one same receiving end. Each of the plurality of photovoltaic power generators includes a solar cell receiving sunlight and outputting electric power, and a storage battery for storing the electric power. The power operation system includes a limiting unit limiting storage of electric power by a first photovoltaic power generator among the plurality of photovoltaic power generators in a first time period, and limiting storage of electric power by a second photovoltaic power generator among the plurality of photovoltaic power generators in a second time period different from the first time period.

Preferably, each of the plurality of photovoltaic power generators further includes a communication interface for communication with another photovoltaic power generator, and a battery control unit for controlling the storage of electric power and output of the electric power to the electric power system. The battery control unit of the first photovoltaic power generator includes the limiting unit.

Preferably, each of the plurality of photovoltaic power generators further includes a battery control unit for controlling the storage of electric power and output of the electric power to the electric power system. The power operation system further includes: a communication interface for communication with the battery control unit; and a central control unit for controlling the battery control unit through the communication unit. The central control unit includes the limiting unit.

Preferably, each of the plurality of photovoltaic power generators further includes a detecting unit detecting an output value of electric power from the solar cell. The limiting unit determines whether or not the solar cell outputs electric power based on the output value from the detecting unit, and calculates the first and second time periods based on the time point when the solar cell started to output electric power.

Preferably, each of the plurality of photovoltaic power generators further includes a detecting unit detecting an output value of electric power from the solar cell. The limiting unit determines whether or not the output value reached a prescribed value based on the output value from the detecting unit, and calculates the first and second time periods based on the time point when the output value reached the prescribed value.

Preferably, the limiting unit calculates a third time period from the time point when the output value reached (or exceeded) the prescribed value to a prescribed time point, and calculates, based on the third time period and the number of the plurality of photovoltaic power generators, a time period in which storage of electric power should be limited in each of the photovoltaic power generators.

Preferably, each of the plurality of photovoltaic power generators further includes a battery control unit for controlling the storage of electric power and output of the electric power to the electric power system, as a part of the limiting unit. The battery control unit of a first photovoltaic power generator among the plurality of photovoltaic power generators limits storage of electric power by the first photovoltaic power generator in a first time period, and the battery control unit of a second photovoltaic power generator among the plurality of photovoltaic power generators limits storage of electric power by the second photovoltaic power generator in a second time period.

Preferably, the first time period is from sunrise to a prescribed time point. The second time period is from the prescribed time point to sunset.

According to another aspect, the present invention provides a power operation method using a plurality of photovoltaic power generators connected to an electric power system through one same receiving end, and a control unit. Each of the plurality of photovoltaic power generators includes a solar cell receiving sunlight and outputting electric power, and a storage battery for storing the electric power. The power operation method includes the steps of: the control unit limiting storage of electric power by a first photovoltaic power generator among the plurality of photovoltaic power generators in a first time period; and the control unit limiting storage of electric power by a second photovoltaic power generator among the plurality of photovoltaic power generators in a second time period different from the first time period.

Preferably, each of the plurality of photovoltaic power generators further includes a communication interface for communication with another photovoltaic power generator, and a battery control unit for controlling the storage of electric power and output of the electric power to the electric power system. The step of limiting storage of electric power by the first photovoltaic power generator includes the step of the battery control unit of first photovoltaic power generator limiting, as the control unit, storage of electric power by the first photovoltaic power generator in the first time period. The step of limiting storage of electric power by the second photovoltaic power generator includes the step of the battery control unit of first photovoltaic power generator limiting, as the control unit, storage of electric power by the second photovoltaic power generator in the second time period, through the communication interface.

Preferably, each of the plurality of photovoltaic power generators includes a communication interface for communication with the control unit, and a battery control unit for controlling the storage of electric power and output of the electric power to the electric power system. The step of limiting storage of electric power by the first photovoltaic power generator includes the step of the control unit causing the battery control unit of the first photovoltaic power generator to limit storage of electric power by the first photovoltaic power generator in the first time period. The step of limiting storage of electric power by the second photovoltaic power generator includes the step of the control unit causing the battery control unit of the second photovoltaic power generator to limit storage of electric power by the second photovoltaic power generator in the second time period.

Preferably, each of the plurality of photovoltaic power generators further includes a detecting unit detecting an output value of electric power from the solar cell. The power operation method further includes the steps of: the control unit determining whether or not the solar cell outputs electric power based on the output value from the detecting unit; and the control unit calculating the first and second time periods based on the time point when the solar cell started to output electric power.

Preferably, each of the plurality of photovoltaic power generators further includes a detecting unit detecting an output value of electric power from the solar cell. The power operation method further includes the steps of: the control unit determining whether or not the output value reached a prescribed value based on the output value from the detecting unit, and the control unit calculating the first and second time periods based on the time point when the output value reached the prescribed value.

Preferably, the step of calculating the first and second time periods includes the steps of the control unit calculating a third time period from the time point to a prescribed time point, and the control unit calculating, based on the third time period and the number of the plurality of photovoltaic power generators, a time period in which storage of electric power should be limited in each of the photovoltaic power generators.

Preferably, each of the plurality of photovoltaic power generators further includes a battery control unit for controlling the storage of electric power and output of the electric power to the electric power system. The step of limiting storage of electric power by the first photovoltaic power generator includes the step of the battery control unit of first photovoltaic power generator limiting, as a part of the control unit, storage of electric power by the first photovoltaic power generator in the first time period. The step of limiting storage of electric power by the second photovoltaic power generator includes the step of the battery control unit of second photovoltaic power generator limiting, as a part of the control unit, storage of electric power by the second photovoltaic power generator in the second time period.

Preferably, the first time period is from sunrise to a prescribed time point. The second time period is from the prescribed time point to sunset.

According to a further aspect, the present invention provides a photovoltaic power generator connected to an electric power system through a receiving end. The generator includes: a solar cell receiving sunlight and outputting electric power; a storage battery for storing the electric power; a communication interface for communication with another photovoltaic power generator connected to the electric power system through the receiving end; and a control unit controlling the storage of electric power and output of the electric power to the electric power system. The control unit limits storage of electric power by the photovoltaic power generator in a first time period, and limits storage of electric power by the said another photovoltaic power generator in a second time period, through the communication interface.

Preferably, the photovoltaic power generator further includes a detecting unit detecting an output value of electric power from the solar cell. The control unit determines whether or not the solar cell outputs electric power based on the output value from the detecting unit, and calculates the first and second time periods based on the time point when the solar cell started to output electric power.

Preferably, the photovoltaic power generator further includes a detecting unit detecting an output value of electric power from the solar cell. The control unit determines whether or not the output value reached a prescribed value based on the output value from the detecting unit, and calculates the first and second time periods based on the time point when the output value reached the prescribed value.

Preferably, the control unit calculates a third time period from the time point when the output value reached (or exceeded) the prescribed value to a prescribed time point, and calculates, based on the third time period and the number of photovoltaic power generators connected to the electric power system through the receiving end, a time period in which storage of electric power should be limited in each of the photovoltaic power generators.

According to a still further aspect, the present invention provides a controller controlling a photovoltaic power generator including a solar cell receiving sunlight and outputting electric power and a storage battery for storing the electric power and connected to an electric power system through a receiving end. The controller includes: a communication interface for communication with another photovoltaic power generator connected to the electric power system through the receiving end; and a control unit controlling the storage of electric power and output of the electric power to the electric power system. The control unit limits storage of electric power by the photovoltaic power generator in a first time period, and limits storage of electric power by the said another photovoltaic power generator in a second time period, through the communication interface.

According to a still further aspect, the present invention provides a controller communicable to first and second photovoltaic power generators including a solar cell receiving sunlight and outputting electric power and a storage battery for storing the electric power and connected to an electric power system through one same receiving end. The controller includes: a communication interface for communication with the first and second photovoltaic power generators; and a control unit. The control unit limits storage of electric power by the first photovoltaic power generator in a first time period through the communication interface, and limits storage of electric power by the second photovoltaic power generator in a second time period, through the communication interface.

Preferably, each of the photovoltaic power generators further includes a detecting unit detecting an output value of electric power from the solar cell. The control unit determines whether or not the solar cell outputs electric power based on the output value from the detecting unit, and calculates the first and second time periods based on the time point when the solar cell started to output electric power.

Preferably, each of the photovoltaic power generators further includes a detecting unit detecting an output value of electric power from the solar cell. The control unit determines whether or not the output value reached a prescribed value based on the output value from the detecting unit, and calculates the first and second time periods based on the time point when the output value reached the prescribed value.

Preferably, the control unit calculates a third time period from the time point when the output value reached (or exceeded) the prescribed value to a prescribed time point, and calculates, based on the third time period and the number of the photovoltaic power generators connected to the electric power system through the receiving end, a time period in which storage of electric power should be limited in each of the photovoltaic power generators.

As described above, by the present invention, a power operation system, a power operation method, a photovoltaic power generator and a controller, reducing fluctuation in the amount of electric power sold by a plurality of photovoltaic power generators to the electric power system, can be provided.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is an illustration showing a schematic configuration of the power operation system in accordance with Embodiment 1.

Fig. 2 is a graph showing a change in the amount of power sold through a pole transformer when each house does not have any power storage device.

Fig. 3 is a graph showing a change in the amount of power sold through a pole transformer when each house has a power storage device.

Fig. 4 is a graph showing a change in the amount of power sold through a pole transformer in the power operation system in accordance with Embodiment 1.

Fig. 5 is a block diagram showing hardware configuration of the power operation system in accordance with Embodiment 1.

Fig. 6 shows control sequence by each battery control unit in the power operation system in accordance with Embodiment 1.

Fig. 7 shows control sequence by each battery control unit in the power operation system in accordance with a first modification of Embodiment 1.

Fig. 8 is a flowchart representing process steps of a power storage limiting process by the battery control unit in accordance with the first modification.

Fig. 9 is a graph showing a change in the amount of power sold through a pole transformer in the power operation system in accordance with the first modification.

Fig. 10 shows control sequence by each battery control unit in the power operation system in accordance with a second modification of Embodiment 1.

Fig. 11 is a graph showing a change in the amount of power sold through a pole transformer in the power operation system in accordance with the second modification.

Fig. 12 shows control sequence by each battery control unit in the power operation system in accordance with a third modification of Embodiment 1.

Fig. 13 is a block diagram showing hardware configuration of the power operation system in accordance with Embodiment 2.

Figs. 14A and 14B show control sequence by each battery control unit in the power operation system in accordance with Embodiment 2.

Fig. 15 is a flowchart representing process steps of a power storage limiting process by the central control unit in accordance with Embodiment 2.

DESCRIPTION OF THE PREFERRED EMBODIMENTS

In the following, embodiments of the present invention will be described. In the following description, the same components are denoted by the same reference characters. Their names and functions are also the same. Therefore, detailed description thereof will not be repeated.

[Embodiment 1]

<Schematic Configuration of Power Operation System 100>

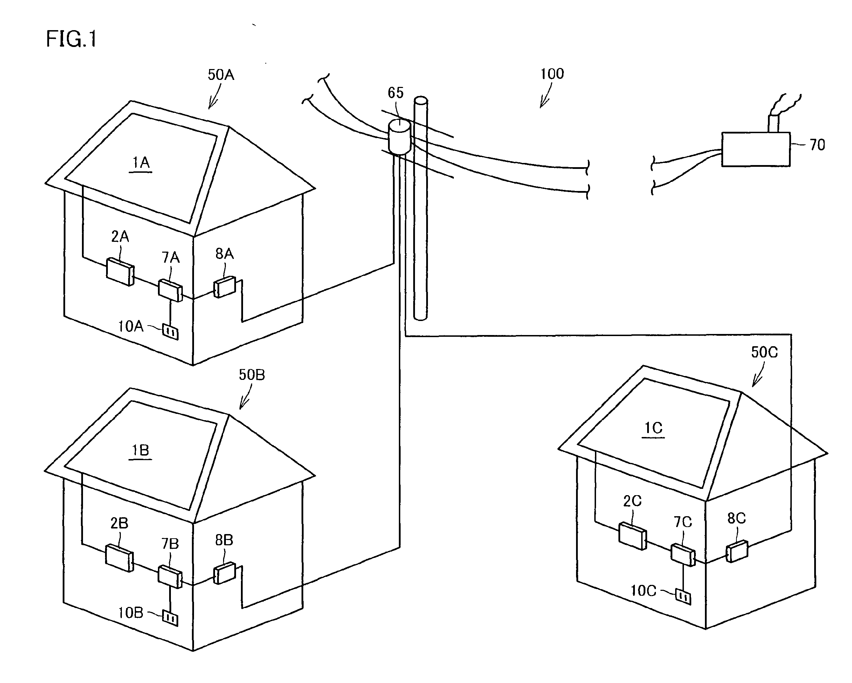

First, referring to Fig. 1, a schematic configuration of power operation system 100 in accordance with the present embodiment will be described. Fig. 1 is an illustration showing a schematic configuration of the power operation system 100 in accordance with the present embodiment. It is noted that, in the following, all time is represented in 24 hours system.

Referring to Fig. 1, power operation system 100 includes, for houses 50A, 50B, and 50C, solar cells 1A, 1B and 1C, solar cell power conditioners 2A, 2B and 2C, distribution boards 7A, 7B and 7C, electricity meters 8A, 8B and 8C, and electric loads 10A, 10B and 10C, respectively. Power operation system 100 further includes a pole transformer or a transformer (hereinafter both are generally referred to as pole transformer 65 (receiving end of the electric power system)) for supplying power from a power plant 70 to houses 50A, 50B and 50C. Pole transformer 65 is electrically connected to distribution boards 7A, 7B and 7C, supplies power from the electric power system to distribution boards 7A, 7B and 7C of houses 50A, 50B and 50C, and supplies power from solar cells 1A, 1B and 1C to the electric power system.

In power operation system 100 in accordance with the present embodiment, in houses 50A, 50B and 50C, power generated by solar cells 1A, 1B and 1C is used by loads 10A, 10B and 10C, respectively. If solar cells 1A, 1B and 1C cannot provide sufficient power necessary for loads 10A, 10B and 10C, houses 50A, 50B and 50C buy power from pole transformer 65 (electric power purchase). If solar cells 1A, 1B and 1C generate power larger than required by loads 10A, 10B and 10C, houses 50A, 50B and 50C supply power to pole transformer 65 (electric power sales). In the following, electric power purchase refers to getting power from the electric power system through pole transformer 65 to each house, and electric power sales refers to feeding power from each house through pole transformer 65 to the electric power system.

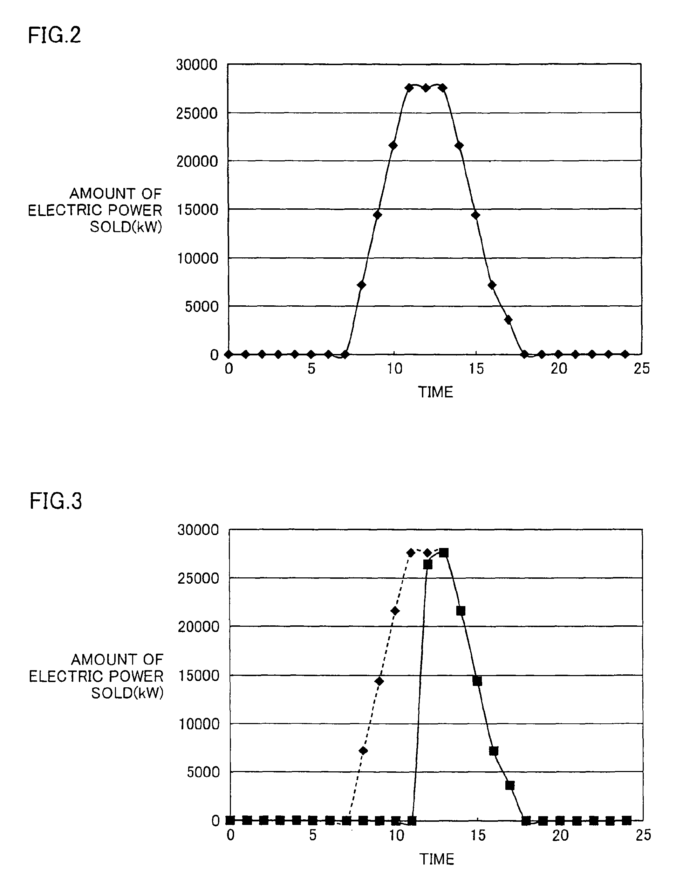

Further, in power operation system 100 in accordance with the present embodiment, each of the houses 50A, 50B and 50C has a power storage device (see Fig. 3). If solar cells 1A, 1B and 1C generate power larger than required by loads 10A 10B and 10C, excessive power is stored in the power storage device. If solar cells 1A, 1B and 1C cannot provide power necessary for loads 10A, 10B and 10C, loads 10A, 10B and 10C also use power from the power storage device. If solar cells 1A, 1B and 1C generate power larger than required by loads 10A, 10B and 10C with the power storage device full, houses 50A, 50B and 50C supply power to pole transformer 65 (electric power sales).

<Characteristics of Power Operation System without Power Storage Device>

As a reference, an example in which houses 50A, 50B and 50C do not have any power storage device will be described. Fig. 2 is a graph showing a change in the amount of power sold through pole transformer 65 when each of the houses 50A, 50B and 50C does not have any power storage device.

Referring to Fig. 2, the amount of electric power sold through pole transformer 65 starts to increase from sunrise, and peaks at around 11:00 to 13:00. Specifically, the amount of electric power sales through pole transformer 65 at night (basically zero) and the amount of electric power sales through pole transformer 65 around 11:00 to 13:00 is very much different. In other words, there is a considerable change in electric power sales by a plurality of photovoltaic power generators.

<Characteristics of Power Operation System with Power Storage Device>

Next, as a reference, an example in which houses 50A, 50B and 50C have power storage devices will be described. Fig. 3 is a graph showing a change in the amount of power sold through pole transformer 65 when each of the houses 50A, 50B and 50C has a power storage device. In Fig. 3, the change in the amount of power sold through pole transformer 65 when each of the houses 50A, 50B and 50C does not have any power storage device is plotted in a dotted line.

Referring to Fig. 3, the amount of electric power sold through pole transformer 65 starts to increase at around noon, and peaks at around 13:00. The reason for this is that from sunrise, the power storage device starts accumulating power generated by the solar cells and since the power is charged in the power storage device, the amount of electric power sales does not increase in the morning. When the power storage device is fully charged at around noon, the amount of electric power sales increases thereafter, in the similar manner as shown in Fig. 2. Specifically, the amount of electric power sales through pole transformer 65 at night (basically zero) and the amount of electric power sales through pole transformer 65 around 13:00 is very much different. In other words, there is a considerable change in electric power sales by a plurality of photovoltaic power generators.

<Characteristics of Power Operation System in Accordance with Present Embodiment>

In order to solve the above-described problem, power operation system 100 in accordance with the present embodiment shifts the time when the power storage devices are fully charged house by house among houses 50A, 50B and 50C. In other words, in power operation system 100 in accordance with the present embodiment, the time of electric power sales is made different in each of houses 50A, 50B and 50C.

More specifically, power operation system 100 in accordance with the present embodiment limits storage of electric power in different time periods, in each of houses 50A, 50B and 50C. In other words, in power operation system 100 in accordance with the present embodiment, electric power sales is given priority at different time periods in houses 50A, 50B and 50C.

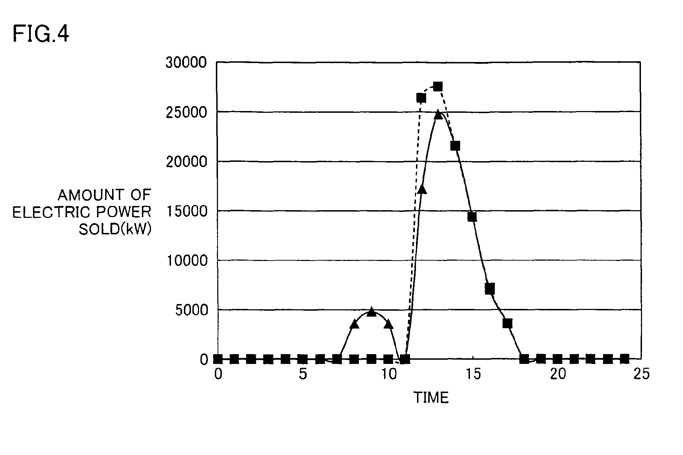

Fig. 4 is a graph showing a change in the amount of power sold through pole transformer 65 in power operation system 100 in accordance with the present embodiment. In Fig. 4, the change in the amount of power sold through pole transformer 65 when each of the houses 50A, 50B and 50C has a power storage device and power storage is not limited (see Fig. 3) is plotted in a dotted line.

Referring to Fig. 4, according to the present embodiment, the time period in which power storage is limited (the time period of electric power sales) is made different house by house. Therefore, the peak of electric power sales becomes lower than Figs. 2 and 3. Specifically, in power operation system 100 in accordance with the present embodiment, it is possible to reduce the difference in the amount of electric power sales at pole transformer 65 at night (basically zero) and the amount of electric power sales at pole transformer 65 at around 13:00. In other words, by power operation system 100 in accordance with the present embodiment, the change in the amount of electric power sales by the plurality of photovoltaic power generators can be reduced.

In the following, a configuration for realizing such a function will be described.

<Hardware Configuration of Power Operation System 100>

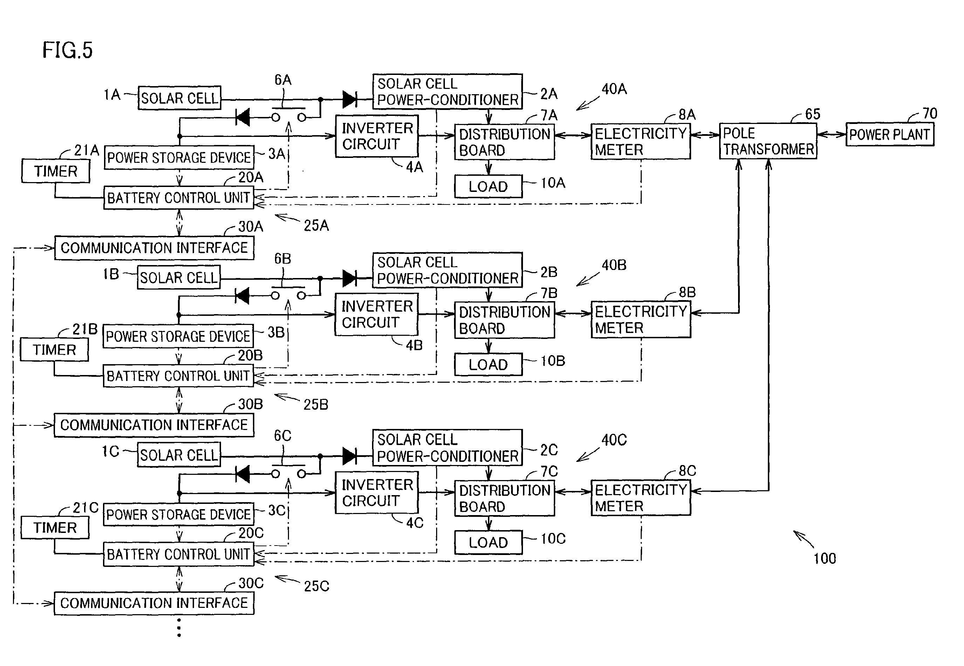

Next, a specific configuration of power operation system 100 in accordance with the present embodiment will be described. Fig. 5 is a block diagram showing hardware configuration of power operation system 100 in accordance with the present embodiment. In Fig. 5, the flow of electric energy (electric power) is represented by solid arrows, and the flow of information (signals) such as numerical values and instructions is represented by dotted arrows.

Referring to Fig. 5, power operation system 100 includes, for houses 50A, 50B and 50C, photovoltaic power generators 40A, 40B and 40C, including solar cells 1A, 1B and 1C, power conditioners 2A, 2B and 2C, power storage devices 3A, 3B and 3C and inverter circuits 4A, 4B and 4C, respectively. Power operation system 100 further includes, for houses 50A, 50B and 50C, distribution boards 7A, 7B and 7C, electricity meters 8A, 8B and 8C, electric loads 10A, 10B and 10C, battery control units 20A, 20B and 20C, timers 21A, 21B and 21C, and communication interfaces 30A, 30B and 30C, respectively.

In the present embodiment, photovoltaic power generators 40A, 40B and 40C include battery controllers 25A, 25B and 25C, respectively. Battery controllers 25A, 25B and 25C include battery control units 20A, 20B and 20C, timers 21A, 21B and 21C, and communication interfaces 30A, 30B and 30C, respectively.

Solar cells 1A, 1B and 1C use solar energy, and convert solar energy to electric energy. Solar cells 1A, 1B and 1C are connected to power conditioners 2A, 2B and 2C.

Power conditioners 2A, 2B and 2C convert DC power input from solar cells 1A, 1B and 1C to AC power for output. Power conditioners 2A, 2B and 2C in accordance with the present embodiment are connected to distribution boards 7A, 7B and 7C.

In the present embodiment, power conditioners 2A, 2B and 2C detect, as detecting units, output values of electric power (amount of power generation) generated by solar cells 1A, 1B and 1C and transmit the output values to battery control units 20A, 20B and 20C. In the following, the signal transmitted from the detecting unit to battery control units 20A, 20B and 20C will be referred to as a power generation signal. It is noted, however, that solar cells 1A, 1B and 1C or battery control units 20A, 20B and 20C (if provided with a detecting unit as one of their functions) or other device may serve as detecting units to detect the output values of electric power generated by solar cells 1A, 1B and 1C, and the battery control units 20A, 20B and 20C may use the thus provided output values. As will be described later, battery control units 20A, 20B and 20C determine whether or not solar cells 1A, 1B and 1C are generating power, based on the output values of solar cells 1A, 1B and 1C.

Alternatively, power conditioners 2A, 2B and 2C serving as detecting units, solar cells 1A, 1B and 1C or other device may determine whether or not solar cells 1A, 1B and 1C are generating power, based on the power output values. In that case, information representing whether or not solar cells 1A, 1B and 1C are generating power (or information that solar cells 1A, 1B and 1C are generating power) is transmitted periodically to battery control units 20A, 20B and 20C.

It is noted that power conditioners 2A, 2B and 2C, solar cells 1A, 1B and 1C, battery control units 20A, 20B and 20C or other device can obtain at least one of output voltage (V), output current (A) and output power (W) at opposite ends of solar cells 1A, 1B and 1C as the output value of solar cells 1A, 1B and 1C. By way of example, power conditioners 2A, 2B and 2C, battery control units 20A, 20B and 20C or other device may obtain, as the output values of solar cells 1A, 1B and 1C, the output power (W) at opposite ends of solar cells 1A, 1B and 1C minus the power (W) consumed by photovoltaic power generators 40A, 40B and 40C by themselves.

Power storage devices 3A, 3B and 3C store electric power input from solar cells 1A, 1B and 1C. Power storage devices 3A, 3B and 3C are connected to switches 6A, 6B and 6C and to input terminals of inverter circuits 4A, 4B and 4C. A common lead storage battery or a device storing energy using flywheel may be used as power storage devices 3A, 3B and 3C. Further, not only a single storage battery but also a plurality of storage batteries connected to each other may be used as power storage devices 3A, 3B and 3C.

Output terminals of inverter circuits 4A, 4B and 4C are connected to distribution boards 7A, 7B and 7C. Inverter circuits 4A, 4B and 4C have a function for linkage to the electric power system. Inverter circuits 4A, 4B and 4C convert DC power input from power storage device 3A, 3B and 3C to AC power and supply to loads 10A, 10B and 10C.

Distribution boards 7A, 7B and 7C are connected to power conditioners 2A, 2B and 2C and inverter circuits 4A, 4B and 4C. Distribution boards 7A, 7B and 7C are connected through electricity meters 8A, 8B and 8C to pole transformer 65 on the side of electric power system. Distribution boards 7A, 7B and 7C supply electric power from power conditioners 2A, 2B and 2C and inverter circuits 4A, 4B and 4C through loads 10A, 10B and 10C and pole transformer 65 to the electric power system. Distribution boards 7A, 7B and 7C supply electric power from the electric power system through pole transformer 65 to loads 10A, 10B and 10C.

Switches 6A, 6B and 6C are connected to solar cells 1A, 1B and 1C and power storage devices 3A, 3B and 3C. Switches 6A, 6B and 6C turn ON/OFF connections between solar cells 1A, 1B and 1C and power storage devices 3A, 3B and 3C, based on control signals from battery control units 20A, 20B and 20C.

Battery control units 20A, 20B and 20C are realized, for example, by a CPU (Central Processing Unit) and a control program executed by the CPU. More specifically, the CPU reads a control program stored in a memory, not shown, and executes the program, whereby battery control units 20A, 20B and 20C are realized.

Battery control units 20A, 20B and 20C control switching of switches 6A, 6B and 6C, based on a limiting signal, which will be described later, the amount of electric power stored in power storage devices 3A, 3B and 3C, and the amount of electric power at distribution boards 7A, 7B and 7C and electricity meters 8A, 8B and 8C. Battery control units 20A, 20B and 20C transmit/receive data to/from other battery control units 20A, 20B and 20C through communication interfaces 30A, 30B and 30C. By way of example, battery control unit 20A transmits the limiting signal to other battery control units 20B and 20C through communication interfaces 30A, 30B and 30C.

Battery control units 20A, 20B and 20C in accordance with the present embodiment limits power storage in a prescribed time period with reference to timers 21A, 21B and 21C. By way of example, battery control units 20B and 20C turn OFF switches 6B and 6C for a prescribed time period based on a control signal from battery control unit 20A.

<Outline of Operation of Power Operation System 100>

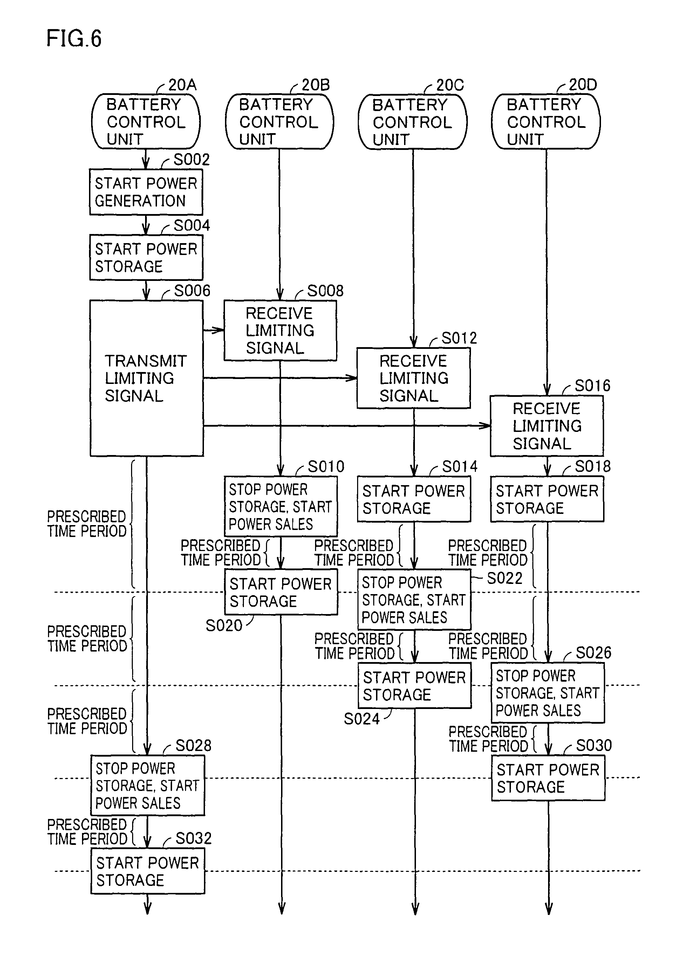

Next, an outline of the operation of power operation system 100 in accordance with the present embodiment will be described. Fig. 6 shows control sequence by battery control units 20A, 20B, 20C and 20D in power operation system 100 in accordance with the present embodiment.

Referring to Fig. 6, battery control unit 20A (first battery control unit) of photovoltaic power generator 40A (first photovoltaic power generator) of house 50A (first house) detects that solar cell 1A started power generation (step S002). In the present embodiment, battery control unit 20A detects that solar cell 1A started power generation, based on a power generation signal from power conditioner 2A. Specifically, when the amount of power generated by solar cell 1A exceeds the power consumed by the photovoltaic power generator itself such as power conditioner 2A, it is determined that solar cell 1 A started power generation.

Battery control unit 20A turns ON switch 6A, so as to start charging power storage device 3A with the excessive power (step S004). More specifically, battery control unit 20A starts to store the excessive power not used by load 10A in power storage device 3A, based on a signal from distribution board 7A or a signal from electricity meter 8A. Battery control unit 20A transmits a signal (limiting signal) for limiting power storage to battery control units 20B and 20D (second to fourth battery control units) of photovoltaic power generators (second to fourth photovoltaic power generators) of other houses (second to fourth houses) (step S006).

Here, battery control unit 20A transmits the time period (for example, from 7:00 to 9:00, 9:00 to 11:00, 11:00 to 13:00) in which power storage should be limited in respective battery control units 20B, 20C and 20D, to battery control units 20B, 20C and 20D, based on the present time point. Alternatively, battery control unit 20A may transmit the time length (for example, 1 hour, 2 hours) in which power storage should be limited in respective battery control units 20B, 20C and 20D, to battery control units 20B, 20C and 20D, when the time point comes from which battery control units 20B, 20C and 20D should start limiting power storage.

Battery control unit 20B receives the limiting signal from battery control unit 20A, through communication interface 30B (step S008). Based on the limiting signal, battery control unit 20B turns OFF switch 6B, whereby power storage is stopped for a prescribed time period (for a certain time from a prescribed time point), and electric power sales is given priority (step S010).

Battery control unit 20C receives the limiting signal from battery control unit 20A, through communication interface 30C (step S012). Based on the limiting signal, battery control unit 20C turns ON switch 6C, whereby power storage is given priority for a prescribed time period (step S014).

Battery control unit 20D receives the limiting signal from battery control unit 20A, through a communication interface (steps S016). Based on the limiting signal, battery control unit 20D maintains a switch ON for twice the prescribed time period, whereby power storage is given priority (step S018),

When the prescribed time passes or the prescribed time period ends, battery control unit 20B turns ON switch 6B, whereby power storage starts (step S020).

When the prescribed time passes or the prescribed time period ends, battery control unit 20C turns OFF switch 6C, whereby power storage is stopped for a prescribed time period and electric power sales is given priority (step S022).

When the prescribed time further passes, battery control unit 20C turns ON switch 6C, to start power storage (step S024).

When twice the prescribed time period passes from step S018, battery control unit 20D turns OFF the switch, whereby power storage is stopped for a prescribed time period, and electric power sales is given priority (step S026).

When three times the prescribed time period passes from step S006, battery control unit 20A turns OFF switch 6A, whereby power storage is stopped for the prescribed time period and electric power sales is given priority (step S028). When the prescribed time passes from step S026, battery control unit 20D turns ON the switch, to start power storage (step S030).

When a prescribed time passes from step S028, battery control unit 20A turns ON switch 6A, to start power storage (step S032).

In this manner, in power operation system 100 in accordance with the present embodiment, battery control unit 20A limits power storage in photovoltaic power generators 40A, 40B and 40C for a prescribed time period. Therefore, power storage devices 3A, 3B and 3C of photovoltaic power generators 40A, 40B and 40C come to be fully charged at different timings. Therefore, in power operation system 100 in accordance with the present embodiment, it is possible to prevent photovoltaic power generators 40A, 40B and 40C from starting electric power sales at one time. Thus, the change in the amount of electric power sales at pole transformer 65 can be reduced.

<Outline of Operation of First Modification of Power Operation System 100>

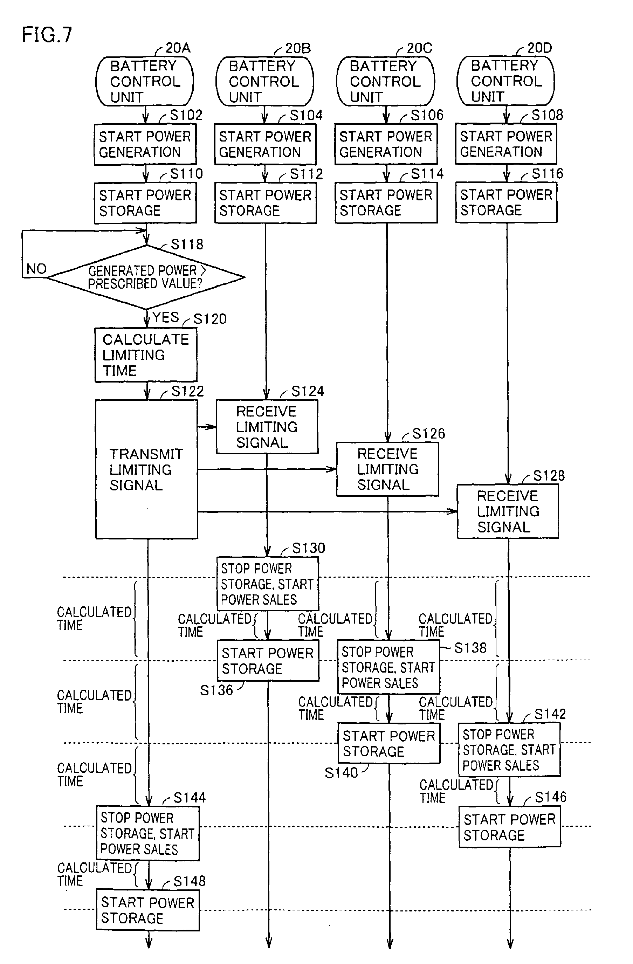

Next, a first modification of power operation system 100 in accordance with the present embodiment will be described. Fig. 7 shows control sequence by battery control units 20A, 20B, 20C and 20D in the power operation system 100 in accordance with a first modification of of the present embodiment. In the present modification, battery control unit 20A calculates the time of limiting power storage in each photovoltaic power generator, based on the time point when power generation starts.

Referring to Fig. 7, battery control unit 20A (first battery control unit) of photovoltaic power generator 40A (first photovoltaic power generator) of house 50A (first house) detects that solar cell 1A started power generation (step S 102). Battery control unit 20B (second battery control unit) of photovoltaic power generator 40B (second photovoltaic power generator) of house 50B (second house) detects that solar cell 1B started power generation (step S104). Battery control unit 20C (third battery control unit) of photovoltaic power generator 40C (third photovoltaic power generator) of house 50C (third house) detects that solar cell 1C started power generation (step S106). Battery control unit 20D (fourth battery control unit) of a photovoltaic power generator (fourth photovoltaic power generator) of a house (fourth house) detects that the solar cell started power generation (step S108).

Battery control unit 20A turns ON switch 6A, to start charging of power storage device 3A with the excessive power (step S110). Battery control unit 20B turns ON switch 6B, to start charging of power storage device 3B with the excessive power (step S112). Battery control unit 20C turns ON switch 6C, to start charging of power storage device 3C with the excessive power (step S114). Battery control unit 20D turns ON a switch, to start charging of a power storage device with the excessive power (step S116).

Battery control unit 20A refers to power conditioner 2A as the detecting means, to determine whether or not the amount of power generation (output value) of solar cell 1A exceeded a prescribed value (step S118). It is noted that battery control unit 20A may obtain the amounts of power generated by the first to fourth photovoltaic power generators through communication interface 30A and may determine whether or not the total amount of power generated by the first to fourth photovoltaic power generators exceeded a prescribed value.

Based on the time point when the amount of power generation exceeded the prescribed value, battery control unit 20A calculates a prescribed time period in which power storage is limited in each photovoltaic power generator (step S 120). Battery control unit 20A in accordance with the present embodiment calculates the power storage limiting time (prescribed time period) of each photovoltaic power generator, by dividing the prescribed time period from that time point to the prescribed time point, by the number of photovoltaic power generators connected to pole transformer 65.

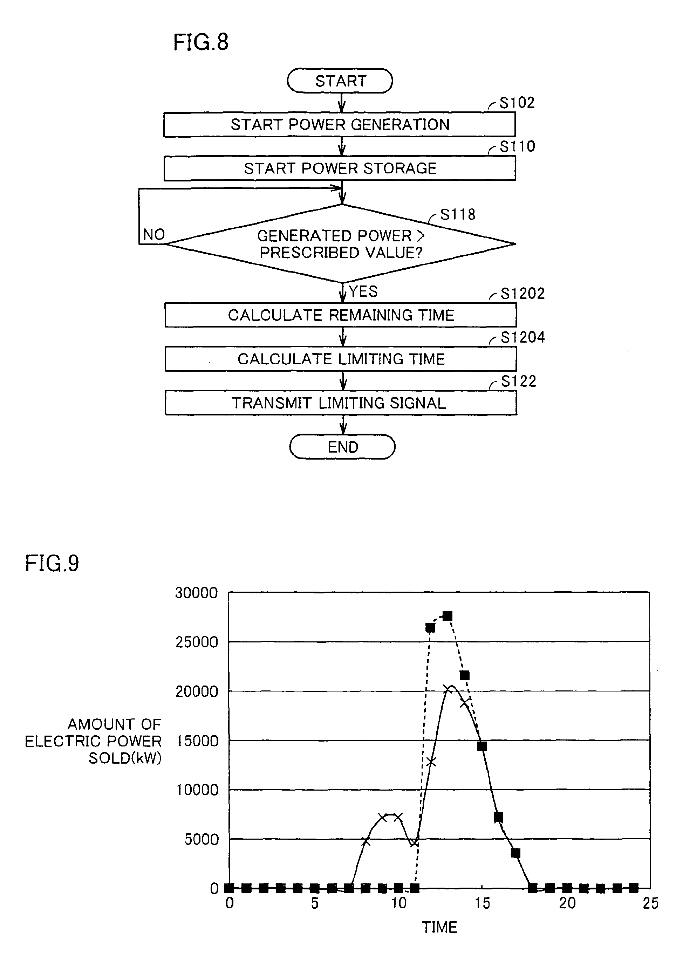

Here, the power storage limiting process in battery control unit 20A will be described. Fig. 8 is a flowchart representing process steps of the power storage limiting process by battery control unit 20A in accordance with the present modification. Here, an example in which four photovoltaic power generators are connected to pole transformer 65 will be described.

Referring to Figs. 7 and 8, battery control unit 20A determines that solar cell 1A started power generation at 7:00 (step S102). Battery control unit 20A turns ON switch 6A, to start charging of power storage device 3A with the power from solar cell 1A (step S104). Battery control unit 20A determines whether or not the amount of power generated by solar cell 1 A exceeded a prescribed value (step S118). If the amount of power generated by solar cell 1A does not exceed the prescribed value (NO at step S 118), battery control unit 20A repeats the process steps from step S 118.

If it is determined by battery control unit 20A that the amount of power generation exceeded the prescribed value (YES at S 118), it calculates remaining time to the expected time point of sunset (step S1202). Here, it is assumed that the amount of power generation exceeds the prescribed value at 11:00, and the expected sunset is 17:00.

Battery control unit 20A calculates the power storage limiting time period (the power storage limiting time period is also defined as "calculated time period") in each photovoltaic power generator based on the following equation (step S1204):

$$(17:00 - 11:00)/4 = 1.5 \text{ hours}.$$

Battery control unit 20A transmits the prescribed time period for limiting power storage to battery control units 20B, 20C and 20D, using communication interface 30A (step S122).

Here, battery control unit 20A causes battery control unit 20B to limit power storage for 1.5 hours from 11:00, using communication interface 30A. Battery control unit 20A causes battery control unit 20C to limit power storage for 1.5 hours from 12:30, using communication interface 30A. Battery control unit 20A causes battery control unit 20D to limit power storage for 1.5 hours from 14:00, using communication interface 30A. Battery control unit 20A does not store power for 1.5 hours, from 15:30.

Returning to Fig. 7, battery control unit 20A transmits signals (limiting signals) for limiting power storage, to battery control units 20B, 20C and 20D through communication interface 30A (step S122), in the manner as described above.

Battery control unit 20B receives the limiting signal from battery control unit 20A through communication interface 30B (step S 124). Battery control unit 20C receives the limiting signal from battery control unit 20A through communication interface 30C (step S 126). Battery control unit 20D receives the limiting signal from battery control unit 20A through a communication interface (step S128).

Based on the received limiting signal, battery control unit 20B turns off switch 6B, whereby power storage is stopped for the prescribed time period (1.5 hours), and electric power sales is given priority (step S 130). At this time, battery control unit 20C maintains switch 6C ON and stores power with priority for the prescribed time period, based on the limiting signal. Battery control unit 20D maintains the switch ON for twice the calculated time period, and stores power with priority, based on the limiting signal.

When the calculated time passes from step S 130 or the prescribed time period ends, battery control unit 20B turns ON switch 6B, to start power storage (step S136). At this time, battery control unit 20C turns OFF switch 6C, to stop power storage for the prescribed time period, and sells power with priority (step S 138).

When the calculated time further passes from step S138, battery control unit 20C turns ON switch 6C, to start power storage (step S140). At this time, battery control unit 20D turns OFF the switch, to stop power storage for the prescribed time period, and sells power with priority (step S142).

When the calculated time passes from step S142, battery control unit 20A turns OFF switch 6A, to stop power storage for the prescribed time period, and sells power with priority (step S 144). At this time, battery control unit 20D turns ON the switch to start power storage (step S 146).

When the calculated time further passes from step S 144, battery control unit 20A turns ON switch 6A, to start power storage (step S 148).

In this manner, in power operation system 100 in accordance with the present modification, power storage in photovoltaic power generators 40A, 40B and 40C is limited only when the amount of power generation exceeded a prescribed value. On a cloudy day or on a rainy day, it is highly likely that power storage devices 3A, 3B and 3C of photovoltaic power generators 40A, 40B and 40C are not fully charged, not necessitating electric power sales. Specifically, in power operation system 100 in accordance with the present embodiment, if it is unnecessary to limit power storage, for example, on a day of thin sunshine, power storage is not limited. On a day with strong sunshine, when power storage devices 3A, 3B and 3C are highly likely charged to full capacity, power storage in photovoltaic power generators 40A, 40B and 40C is limited for prescribed time periods different from each other.

Fig. 9 is a graph showing a change in the amount of power sold through pole transformer 65 in power operation system 100 in accordance with the present modification. In Fig. 9, the change in the amount of power sold through pole transformer 65 in power operation system 100 in accordance with Embodiment 1 is plotted in a dotted line.

Referring to Fig. 9, in the present modification, the time period for selling electric power differs among houses 50A, 50B and 50C, from the time point when the amount of power generation exceeds the prescribed value until a prescribed time point. Therefore, the peak amount of power sold becomes lower than in Figs. 2 to 4. Specifically, by power operation system 100 in accordance with the present modification, it is possible to reduce the difference in the amount of electric power sales at pole transformer 65 at night and the amount of electric power sales at pole transformer 65 at around 13:00.

<Outline of Operation of Second Modification of Power Operation System 100>

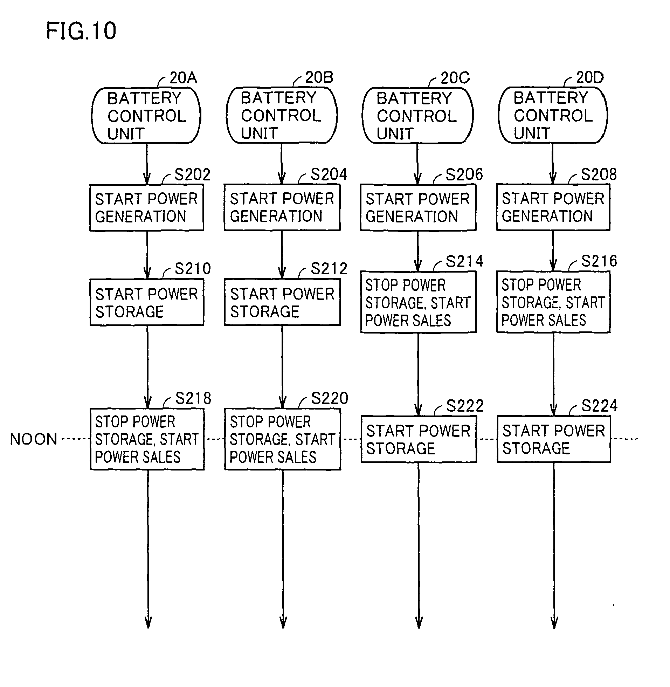

Next, a second modification of power operation system 100 in accordance with the present embodiment will be described. Fig. 10 shows control sequence by battery control units 20A, 20B, 20C and 20D in power operation system 100 in accordance with a second modification of the present embodiment. In the present modification, each of battery control units 20A, 20B, 20C and 20D limits power storage and sells power with priority in a prescribed time period set in advance for each unit, and power is stored with priority in other time periods.

In the present modification, battery control unit 20A of the first photovoltaic power generator 40A and battery control unit 20B of the second photovoltaic power generator 40B store power with priority in the morning, and limit power storage and sell power with priority in the afternoon. On the other hand, battery control unit 20C of the third photovoltaic power generator 40C and battery control unit 20D of the fourth photovoltaic power generator limit power storage and sell power with priority in the morning, and store power with priority in the afternoon.

Referring to Fig. 10, battery control unit 20A (first battery control unit) of photovoltaic power generator 40A (first photovoltaic power generator) of house 50A (first house) detects that solar cell 1A started power generation (step S202). Battery control unit 20B (second battery control unit) of photovoltaic power generator 40B (second photovoltaic power generator) of house 50B (second house) detects that solar cell 1B started power generation (step S204). Battery control unit 20C (third battery control unit) of photovoltaic power generator 40C (third photovoltaic power generator) of house 50C (third house) detects that solar cell 1C started power generation (step S206). Battery control unit 20D (fourth battery control unit) of a photovoltaic power generator (fourth photovoltaic power generator) of a house (fourth house) detects that the solar cell started power generation (step S208).

Battery control unit 20A turns ON switch 6A, to start charging of power storage device 3A with the excessive power (step S210). Battery control unit 20B turns ON switch 6B, to start charging of power storage device 3B with the excessive power (step 5212). Battery control unit 20C turns OFF switch 6C to stop power storage and sells power with priority (step 5214). Battery control unit 20D turns OFF the switch to stop power storage and sells power with priority (step S216).

Specifically, in the morning, battery control units 20A and 20B give priority to power storage to electric power sales, by storing excessive power in power storage devices 3A and 3B. On the other hand, battery control units 20C and 20D supply excessive power to pole transformer 65, to give priority to electric power sales to power storage.

At noon, battery control unit 20A turns OFF switch 6A to stop power storage, and starts selling power with priority (step S218). Battery control unit 20B turns OFF switch 6B to stop power storage, and starts selling power with priority (step S220). Battery control unit 20C turns ON switch 6C to start charging power storage device 3C with the excessive power (step S222). Battery control unit 20D turns ON the switch to start charging the power storage device with the excessive power (step S224).

Specifically, in the afternoon, battery control units 20A and 20B sell power with priority to power storage, by supplying excessive power to pole transformer 65. On the other hand, battery control units 20C and 20D store power with priority to electric power sales, by storing the excessive power in the power storage devices.

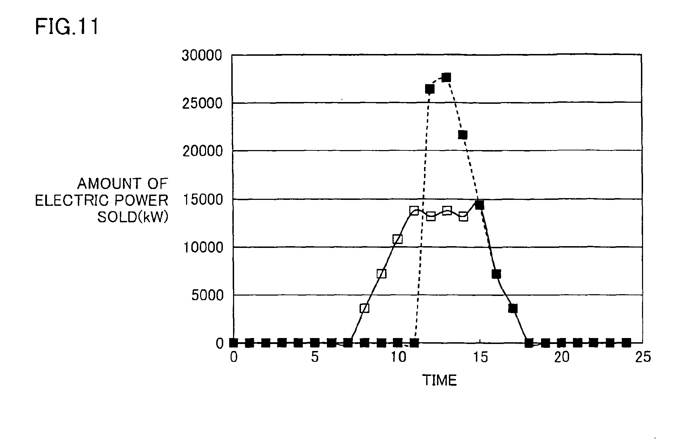

Fig. 11 is a graph showing a change in the amount of power sold through pole transformer 65 in power operation system 100 in accordance with the present modification. In Fig. 11, the change in the amount of power sold through pole transformer 65 in power operation system 100 in accordance with the first modification is plotted in a dotted line.

Referring to Fig. 11, in the present modification, power storage either in the morning or in the afternoon is limited in each photovoltaic power generator. Therefore, the peak of electric power sales becomes even lower than in Figs. 4 and 9. This is because the power storage limiting time period is longer than in the examples of Figs. 4 and 9. Specifically, by power operation system 100 in accordance with the present modification, it is possible to reduce the difference in the amount of electric power sales at pole transformer 65 at night and the amount of electric power sales at pole transformer 65 at around 13:00.

<Outline of Operation of Third Modification of Power Operation System 100>

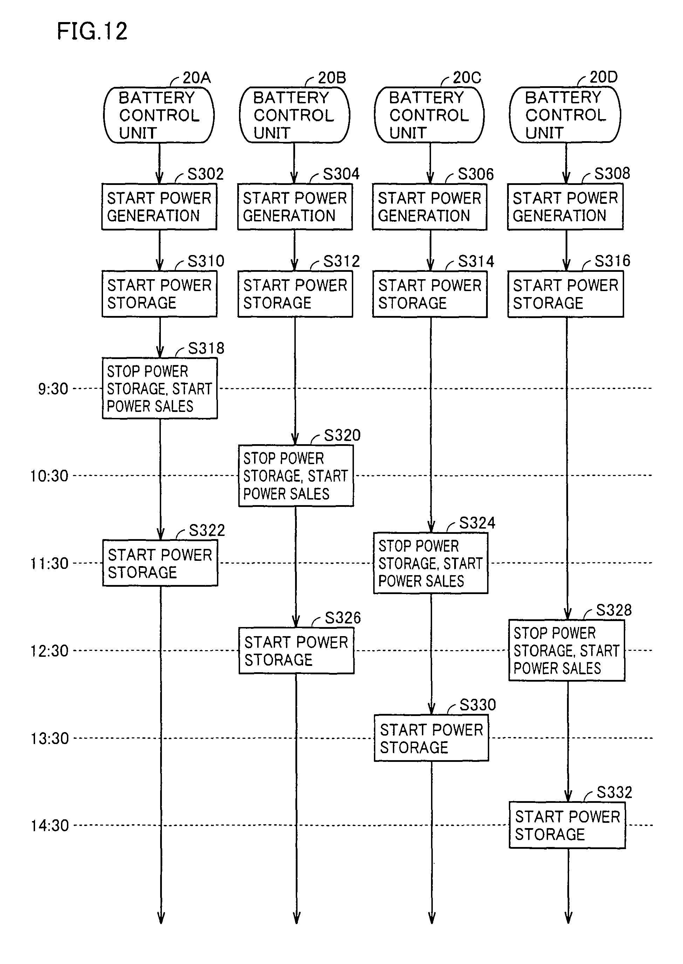

Next, a third modification of power operation system 100 in accordance with the present embodiment will be described. Fig. 12 shows control sequence by battery control units 20A, 20B, 20C and 20D in power operation system100 in accordance with the third modification of the present embodiment. In the present modification also, battery control units 20A, 20B, 20C and 20D limit power storage and sell power with priority in a prescribed time period set in advance for each unit, and store power with priority in other time periods.

In the present modification, in the first photovoltaic power generator, power storage is limited for 2 hours from 9:30. Specifically, battery control unit 20A sells power with priority to power storage, from 9:30 to 11:30. In other time periods, battery control unit 20A stores power with priority, rather than electric power sales.

In the second photovoltaic power generator, power storage is limited for 2 hours from 10:30. Specifically, battery control unit 20B sells power with priority to power storage, from 10:30 to 12:30. In other time periods, battery control unit 20B stores power with priority, rather than electric power sales.

In the third photovoltaic power generator, power storage is limited for 2 hours from 11:30. Specifically, battery control unit 20C sells power with priority to power storage, from 11:30 to 13:30. In other time periods, battery control unit 20C stores power with priority, rather than electric power sales.

In the fourth photovoltaic power generator, power storage is limited for 2 hours from 12:30. Specifically, battery control unit 20D sells power with priority to power storage, from 12:30 to 14:30. In other time periods, battery control unit 20D stores power with priority, rather than electric power sales.

Referring to Fig. 12, battery control unit 20A (first battery control unit) of photovoltaic power generator 40A (first photovoltaic power generator) of house 50A (first house) detects that solar cell 1A started power generation (step 5302). Battery control unit 20B (second battery control unit) of photovoltaic power generator 40B (second photovoltaic power generator) of house 50B (second house) detects that solar cell 1B started power generation (step S304). Battery control unit 20C (third battery control unit) of photovoltaic power generator 40C (third photovoltaic power generator) of house 50C (third house) detects that solar cell 1C started power generation (step S306). Battery control unit 20D (fourth battery control unit) of a photovoltaic power generator (fourth photovoltaic power generator) of a house (fourth house) detects that the solar cell started power generation (step S308).

Battery control unit 20A turns ON switch 6A, to start charging of power storage device 3A with the excessive power (step S310). Battery control unit 20B turns ON switch 6B, to start charging of power storage device 3B with the excessive power (step S312). Battery control unit 20C turns ON switch 6C, to start charging of power storage device 3C with the excessive power (step S314). Battery control unit 20D turns ON switch 6D, to start charging of power storage device 3D with the excessive power (step S316).

When the prescribed time point comes, that is, at 9:30, battery control unit 20A turns OFF switch 6A to stop power storage and starts selling power with priority (step S318).

When the prescribed time point comes, that is, at 10:30, battery control unit 20B turns OFF switch 6B to stop power storage and starts selling power with priority (step S320).

When the prescribed time point comes, that is, at 11:30, battery control unit 20A turns ON switch 6A to start charging of power storage device 3A with the excessive power (step S322). At the same time, battery control unit 20C turns OFF switch 6C to stop power storage and starts selling power with priority (step S324).

When the prescribed time point comes, that is, at 12:30, battery control unit 20B turns ON switch 6B to start charging of power storage device 3B with the excessive power (step S326). At the same time, battery control unit 20D turns OFF the switch to stop power storage and starts selling power with priority (step S328).

When the prescribed time point comes, that is, at 13:30, battery control unit 20C turns ON switch 6C to start charging of power storage device 3C with the excessive power (step 5330).

When the prescribed time point comes, that is, at 14:30, battery control unit 20D turns ON the switch to start charging of the power storage device with the excessive power (step S332).

[Embodiment 2]

Next, Embodiment 2 of the present invention will be described. In power operation system 100 in accordance with Embodiment 1, the battery control units transmit/receive data to/from each other through communication interfaces. Specifically, the first battery control unit controls the second to fourth battery control units, to limit power storage in the first to fourth photovoltaic power generators.

A power operation system 100B in accordance with the present embodiment includes a central control unit separate from the photovoltaic power generators. The central control unit transmits data to battery control units of the photovoltaic power generators through a communication interface. Specifically, the central control unit controls each battery control unit, to limit power storage in the first to fourth photovoltaic power generators.

Schematic configuration of power operation system 100B in accordance with the present embodiment is similar to that of power operation system 100 in accordance with Embodiment 1 and, therefore, description thereof will not be repeated.

<Hardware Configuration of Power Operation System 100B>

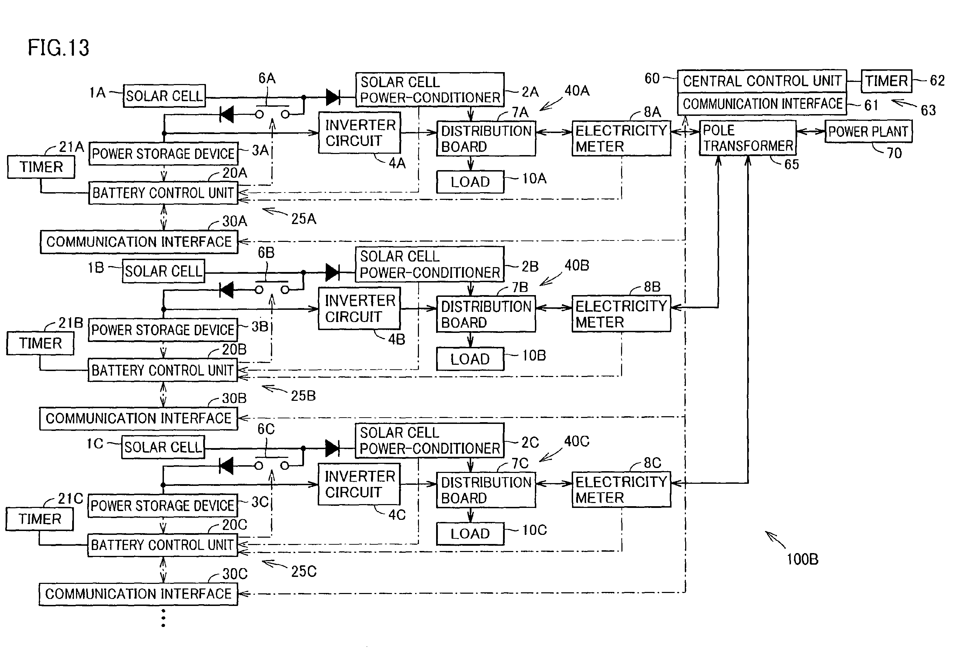

Next, a specific configuration of power operation system 100B in accordance with the present embodiment will be described. Fig. 13 is a block diagram showing hardware configuration of power operation system 100B in accordance with the present embodiment. In Fig. 13, the flow of electric energy (electric power) is represented by solid arrows, and the flow of information (signals) such as numerical values and instructions is represented by dotted arrows.

Referring to Fig. 13, power operation system 100B in accordance with the present embodiment is different from power operation system 100 in accordance with Embodiment 1 in that it includes a central controller 63. Central controller 63 includes a central control unit 60, a communication interface 61, and a timer 62. Except for this point, the configuration of power operation system 100B is the same as that of power operation system 100 in accordance with Embodiment 1 and, therefore, description will not be repeated here. It is noted, however, that in power operation system 100B in accordance with the present embodiment, battery control units 20A to 20D may not be capable of direct communication with each other.

Central control unit 60 is implemented, for example, by a CPU and a control program executed by the CPU. More specifically, the CPU reads a control program stored in a memory, not shown, and executes the program, whereby central control unit 60 is realized.

Central control unit 60 obtains the amounts of electric power stored in power storage devices 3A, 3B and 3C of photovoltaic power generators 40A, 40B and 40C, and amounts of power at distribution boards 7A, 7B and 7C and electricity meters 8A, 8B and 8C, from battery control units 20A, 20B and 20C of photovoltaic power generators 40A, 40B and 40C, through communication interface 61. With reference to timer 62, central control unit 60 causes battery control units 20A, 20B and 20C of photovoltaic power generators 40A, 40B and 40C to open/close switches 6A, 6B and 6C. Specifically, central control unit 60 limits power storage by battery control units 20A, 20B and 20C through communication interface 61.

Each of battery control units 20A, 20B and 20C in accordance with the present embodiment limits power storage in a prescribed time period based on a limiting signal from central control unit 60, with reference to timers 21A, 21B and 21C. By way of example, based on the control signal from central control unit 60, battery control units 20A, 20B and 20C in accordance with the present embodiment turn OFF switches 6A, 6B and 6C in prescribed time periods.

In the present embodiment, power conditioners 2A, 2B and 2C as detecting units detect output values of power generated by solar cells 1A, 1B and 1C, and transmit the output values to battery control units 20A, 20B and 20C. It is noted, however, that solar cells 1A, 1B and 1C or battery control units 20A, 20B and 20C (if provided with a detecting unit as one of their functions) or other device may serve as detecting units to detect the output values of electric power generated by solar cells 1A, 18 and 1C, and the battery control units 20A, 20B and 20C may obtain the output values. In the present embodiment, battery control units 20A, 20B and 20C transmit the output values to central control unit 60 through communication interfaces 30A, 30B and 30C. Central control unit 60 determines whether or not each of solar cells 1A, 1B and 1C is generating power, based on the output values.

Alternatively, power conditioners 2A, 2B and 2C serving as detecting units, solar cells 1A, 1B and 1C or other device may determine whether or not solar cells 1A, 1B and 1C are generating power, based on the power output values. Alternatively, battery control units 20A, 20B and 20C may determine whether or not solar cells 1A, 1B and 1C are generating power, based on the output values. In that case, battery control units 20A, 20B and 20C periodically transmit information representing whether or not solar cells 1A, 1B and 1C are generating power (or information that solar cells 1A, 1B and 1C are generating power) to central control unit 60 through communication interfaces 30A, 30B and 30C.

It is noted that power conditioners 2A, 2B and 2C, solar cells 1A, 1B and 1C, battery control units 20A, 20B and 20C or other device can obtain at least one of output voltage (V), output current (A) and output power (W) at opposite ends of solar cells 1A, 1B and 1C as the output values of solar cells 1A, 1B and 1C. By way of example, power conditioners 2A, 2B and 2C, battery control units 20A, 20B and 20C or other device may obtain, as the output value of solar cells 1A, 1B and 1C, the output power (W) at opposite ends of solar cells 1A, 1B and 1C minus the power (W) consumed by photovoltaic power generators 40A, 40B and 40C by themselves.

<Outline of Operation of Power Operation System 100B>

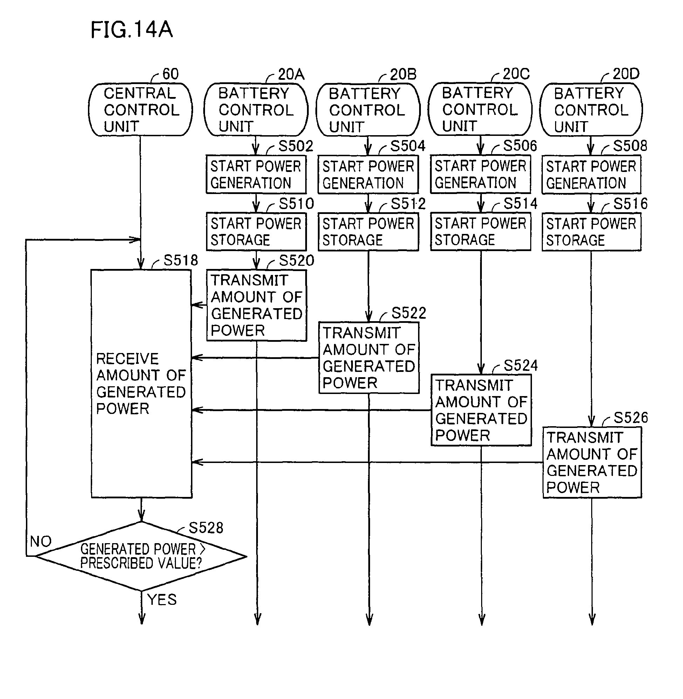

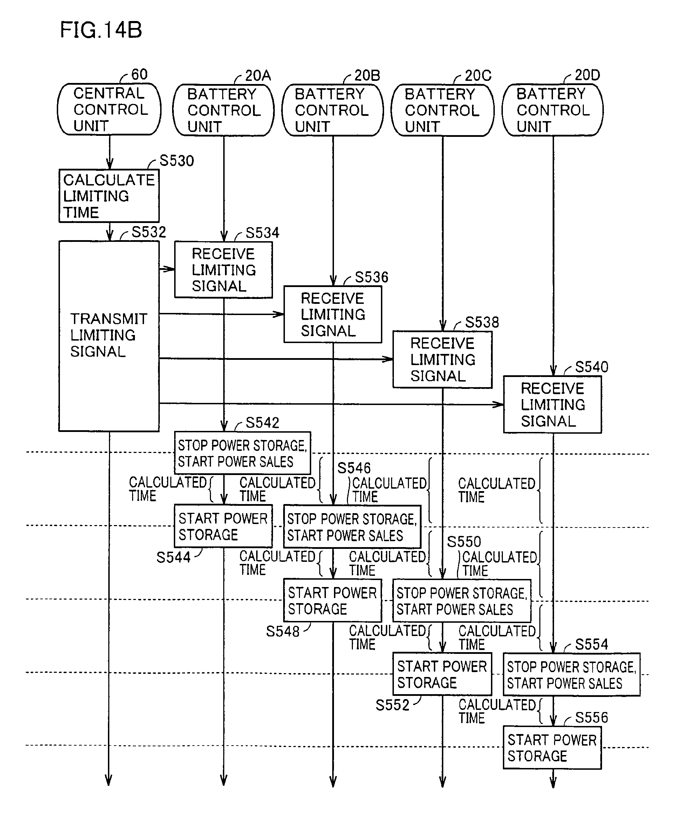

Next, an outline of the operation of power operation system 100B in accordance with the present embodiment will be described. Figs. 14A and 14B show control sequence by battery control units 20A, 20B, 20C and 20D in power operation system 100B in accordance with the present embodiment.

Referring to Figs. 14A and 14B, battery control unit 20A (first battery control unit) of photovoltaic power generator 40A (first photovoltaic power generator) of house 50A (first house) detects that solar cell 1A started power generation (step S502). Battery control unit 20B (second battery control unit) of photovoltaic power generator 40B (second photovoltaic power generator) of house SOB (second house) detects that solar cell 1B started power generation (step S504). Battery control unit 20C (third battery control unit) of photovoltaic power generator 40C (third photovoltaic power generator) of house 50C (third house) detects that solar cell 1C started power generation (step S506). Battery control unit 20D (fourth battery control unit) of a photovoltaic power generator (fourth photovoltaic power generator) of a house (fourth house) detects that the solar cell started power generation (step S508).

Battery control unit 20A turns ON switch 6A, to start charging of power storage device 3A with the excessive power (step S510). Battery control unit 20B turns ON switch 6B, to start charging of power storage device 3B with the excessive power (step S512). Battery control unit 20C turns ON switch 6C, to start charging of power storage device 3C with the excessive power (step S514). Battery control unit 20D turns ON a switch, to start charging of a power storage device with the excessive power (step S516).

Central control unit 60 obtains the amount of generate power from each photovoltaic power generator, through communication interface 61 (step S518). More specifically, battery control unit 20A transmits the amount of power generated by solar cell 1A to central control unit 60 through communication interface 30A (step S520). Battery control unit 20B transmits the amount of power generated by solar cell 1B to central control unit 60 through communication interface 30B (step S522). Battery control unit 20C transmits the amount of power generated by solar cell 1C to central control unit 60 through communication interface 30C (step S524). Battery control unit 20D transmits the amount of power generated by the solar cell to central control unit 60 through a communication interface (step S526).

Central control unit 60 determines whether or not the sum of the amounts of power generated by the first to fourth photovoltaic power generators exceeded a prescribed value, by obtaining the amounts of power generated by the first to fourth photovoltaic power generators using communication interface 61 (step S528). It is noted that central control unit 60 may determine whether or not the amount of power generated by solar cell 1A (or any of solar cells 1B, 1C and 1D) exceeded a prescribed value through communication interface 30A (through interface 30B, 30C or the like).

Based on the time point when the amount of power generation exceeded the prescribed value, with reference to timer 62, central control unit 60 calculates a prescribed time period in which power storage is limited in each photovoltaic power generator (step S530). Central control unit 60 in accordance with the present embodiment calculates the power storage limiting time period of each photovoltaic power generator, by dividing the prescribed time period from that time point to the prescribed time point, by the number of photovoltaic power generators connected to pole transformer 65.

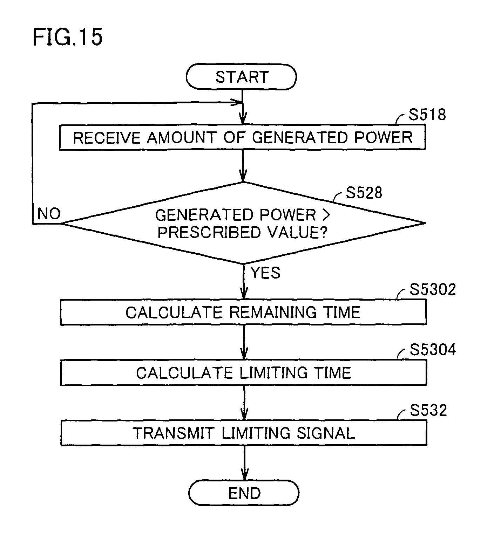

Here, the power storage limiting process in central control unit 60 will be described. Fig. 15 is a flowchart representing process steps of the power storage limiting process by central control unit 60 in accordance with the present embodiment. An example in which four photovoltaic power generators are connected to pole transformer 65 will be described.

Referring to Figs. 14 and 15, central control unit 60 receives the amounts of power generated by the solar cells of respective photovoltaic power generators, from battery control units 20A, 20B, 20C and 20D through communication interface 61, at 7:00 (step S518). Central control unit 60 determines whether or not the total amount of power generated by respective photovoltaic power generators exceeded a prescribed value (step S528). If the total amount of generated power does not exceed the prescribed value (NO at step S528), control unit 60 repeats the process steps from step 5518.

If central control unit 60 determines that the total amount of generated power exceeded the prescribed value (YES at step S528), with reference to timer 62, it calculates remaining time to the expected time point of sunset (step S5302). Here, it is assumed that the amount of power generation exceeds the prescribed value at 11:00, and the expected sunset is 17:00.

Central control unit 60 calculates the power storage limiting time period in each photovoltaic power generator based on the following equation (step S5304):

$$(17:00 - 11:00)/4 = 1.5 \ hours.$$

Central control unit 60 transmits the prescribed time period for limiting power storage to battery control units 20A, 20B, 20C and 20D, using communication interface 61 (step S532).

Here, central control unit 60 causes battery control unit 20A to limit power storage for 1.5 hours from 11:00, using communication interface 61. Central control unit 60 causes battery control unit 20B to limit power storage for 1.5 hours from 12:30, using communication interface 61. Central control unit 60 causes battery control unit 20C to limit power storage for 1.5 hours from 13:00, using communication interface 61. Central control unit 60 causes battery control unit 20D to limit power storage for 1.5 hours from 14:30, using communication interface 61.

Returning to Figs. 14A and 14B, central control unit 60 transmits signals (limiting signals) for limiting power storage, to battery control units 20A, 20B, 20C and 20D through communication interface 61 (step S532), in the manner as described above.

Battery control unit 20A receives the limiting signal from central control unit 60 through communication interface 30A (step S534). Battery control unit 20B receives the limiting signal from central control unit 60 through communication interface 30B (step SS36). Battery control unit 20C receives the limiting signal from central control unit 60 through communication interface 30C (step SS38). Battery control unit 20D receives the limiting signal from central control unit 60 through a communication interface (step S540).

Based on the received limiting signal, battery control unit 20A turns OFF switch 6A, whereby power storage is stopped for the prescribed time period (calculated time period: 1.5 hours), and electric power sales is given priority (step S542). At this time, battery control unit 20B maintains switch 6B ON and stores power with priority for the prescribed time period, based on the limiting signal. Battery control unit 20C maintains the switch ON for twice the calculated time period, and stores power with priority, based on the control signal. Battery control unit 20D maintains the switch ON for three times the calculated time period, and stores power with priority, based on the control signal.

When the calculated time passes from step S542 or the prescribed time period ends, battery control unit 20A turns ON switch 6A, to start power storage (step S544). At this time, battery control unit 20B turns OFF switch 6B, to stop power storage for the prescribed time period, and sells power with priority (step S546).

When the calculated time further passes from step S546, battery control unit 20B turns ON switch 6B, to start power storage (step S548). At this time, battery control unit 20C turns OFF switch 6C, to stop power storage for the prescribed time period, and sells power with priority (step S550).

When the calculated time further passes from step S550, battery control unit 20C turns ON switch 6C, to start power storage (step S552). At this time, battery control unit 20D turns OFF the switch, to stop power storage for the prescribed time period, and sells power with priority (step S554).

When the calculated time further passes from step S554, battery control unit 20D turns ON the switch, to start power storage (step S556).

In this manner, in power operation system 100B in accordance with the present embodiment, power storage in photovoltaic power generators 40A, 40B and 40C is limited only when the amount of power generation exceeded a prescribed value. On a cloudy day or on a rainy day, it is highly likely that power storage devices 3A, 3B and 3C of photovoltaic power generators 40A, 40B and 40C are not fully charged, not necessitating electric power sales. Specifically, in power operation system 100B in accordance with the present embodiment, if it is unnecessary to limit power storage, for example, on a day of thin sunshine, power storage is not limited. On a day with strong sunshine, when power storage devices 3A, 3B and 3C are highly likely charged to full capacity, power storage in photovoltaic power generators 40A, 40B and 40C is limited for prescribed time periods different from each other.

Both in Embodiments 1 and 2, more specifically, it is possible that the time of charging extends to hours when the amount of solar radiation begins to decrease, depending on the conditions for limiting power storage or conditions of resuming power storage. In order to ensure sufficient charging of power storage devices 3A, 3B and 3C, it is preferable to charge around the culmination, when generation of much power by solar cells 1A, 1B and 1C is expected, in each region where power operation system 100 (100B) is installed. By way of example, with the time point of solar culmination in that region being the center (or a time point deviated by a few degrees in azimuth), the preceding one hour may be set as a first time period, and the succeeding one hour may be set as the second time period. Power storage by the first battery control unit 20A and the second battery control unit 20B may be limited in the first time period, and power storage by the third battery control unit 20C and the fourth battery control unit 20D may be limited in the second time period. Central control unit 60 may realize such control through communication interface 61.

Alternatively, one hour before and one hour after the time point of solar culmination in that region may be divided by the number of photovoltaic power generators 40A, 40B and 40C connected to pole transformer 65. For instance, assume that in a region where the sun culminates at 12:30, four photovoltaic power generators are connected to pole transformer 65. Then, time period from 11:30 to 12:00 is set as the first time period, from 12:00 to 12:30 is set as the second time period, 12:30 to 13:00 is set as the third time period, and 13:30 to 14:00 is set as the fourth time period. Power storage by the first battery control unit 20A is limited in the first time period, power storage by the second battery control unit 20B is limited in the second time period, power storage by the third battery control unit 20C is limited in the third time period, and power storage by the fourth battery control unit 20D is limited in the fourth time period. Central control unit 60 may realize such control through communication interface 61.

Specifically, in Japan, the Japan standard time is defined such that the time point of solar culmination in Akashi city, positioned on the standard time line (meridian of 135 degrees of east longitude) is the midnoon. Namely, the sun is the highest at this time point. In Okinawa prefecture, the time point is different in correspondence with the difference in longitude between Okinawa and Akashi, and the time point of solar culmination is about 12:20. On the contrary, in Nemuro city, Hokkaido prefecture, the time point of solar culmination is about 11:20. Further, depending on season and latitude, the time point of culmination changes slightly, because of complicated relation between the plane of orbital motion and the axis of the earth. Therefore, by additionally considering the above-described conditions for limiting power storage or for resuming power storage in power operation system 100 (100B) in accordance with Embodiments 1 and 2, it becomes possible to more appropriately limit power storage in correspondence with the change in the time point of culmination.

<Other Embodiments>

The present invention may also be realized by providing a system or a device with a program. When a storage medium storing a program represented by software attaining the present invention is loaded to a system or a device and a computer of the system or the device (or a CPU or a MPU) reads and executes the program codes stored in the storage medium, the effects of the present invention can also be enjoyed.

In such a case, the program codes themselves read from the storage medium realize the function of the embodiments described above, and the storage medium storing the program codes implements the present invention.

Examples of the storage medium for supplying the program codes include a hard disk, an optical disk, a magneto-optical disk, a CD-ROM, a CD-R, a magnetic tape, a non-volatile memory card (IC memory card), and an ROM (mask ROM, flash EEPROM).

The present invention encompasses cases when the program codes read by the computer are executed and the functions of the above-described embodiments are realized, and when part of or all of actual processing is done by an OS (Operating System) running on the computer based on the instructions of the program codes and thereby the functions of the above-described embodiments are realized.

Further, the present invention also encompasses a case when program codes read from the storage medium are written to a memory provided in a function enhancement unit connected to a computer or a function enhancement board inserted to a computer, part of or all of actual processing is done by a CPU or the like provided on the function enhancement unit or the function enhancement board based on the instructions of the program codes and the functions of the above-described embodiments are realized.

Although the present invention has been described and illustrated in detail, it is clearly understood that the same is by way of illustration and example only and is not to be taken by way of limitation, the scope of the present invention being interpreted by the terms of the appended claims.

**Claims**

1. A power operation method using a plurality of photovoltaic power generators connected to an electric power system through one same receiving end, and a control unit, wherein
each of said plurality of photovoltaic power generators includes a solar cell receiving sunlight and outputting electric power, and
a storage battery for storing said electric power;
said power operation method comprising the steps of:

said control unit limiting storage of electric power by a first photovoltaic power generator among said plurality of photovoltaic power generators in a first time period; and
said control unit limiting storage of electric power by a second photovoltaic power generator among said plurality of photovoltaic power generators in a second time period different from said first time period.

2. The power operation method according to claim 1, wherein
each of said plurality of photovoltaic power generators further includes
a communication interface for communication with another photovoltaic power generator, and
a battery control unit for controlling said storage of electric power and output of said electric power to said electric power system;
said step of limiting storage of electric power by said first photovoltaic power generator includes the step of the battery control unit of said first photovoltaic power generator limiting, as said control unit, storage of electric power by said first photovoltaic power generator in said first time period; and
said step of limiting storage of electric power by said second photovoltaic power generator includes the step of the battery control unit of said first photovoltaic power generator limiting, as said control unit, storage of electric power by said second photovoltaic power generator in said second time period, through said communication interface.

3. The power operation method according to claim 1, wherein
each of said plurality of photovoltaic power generators includes a communication interface for communication with said control unit, and
a battery control unit for controlling said storage of electric power and output of said electric power to said electric power system;
said step of limiting storage of electric power by said first photovoltaic power generator includes the step of said control unit causing the battery control unit of said first photovoltaic power generator to limit storage of electric power by said first photovoltaic power generator in said first time period; and
said step of limiting storage of electric power by said second photovoltaic power generator includes the step of said control unit causing the battery control unit of said second photovoltaic power generator to limit storage of electric power by said second photovoltaic power generator in said second time period.

**4.** The power operation method according to claim 2 or 3, wherein
each of said plurality of photovoltaic power generators further includes a detecting unit detecting an output value of electric power from said solar cell; said power operation method further comprising the steps of:

said control unit determining whether or not said solar cell outputs electric power based on said output value from said detecting unit; and
said control unit calculating said first and second time periods based on a time point when said solar cell started to output electric power.

**5.** The power operation method according to claim 2 or 3, wherein
each of said plurality of photovoltaic power generators further includes a detecting unit detecting an output value of electric power from said solar cell; said power operation method further comprising the steps of:

said control unit determining whether or not said output value reached a prescribed value based on said output value from said detecting unit, and
said control unit calculating said first and second time periods based on a time point when said output value reached said prescribed value.

**6.** The power operation method according to claim 4 or 5, wherein
said step of calculating the first and second time periods includes the steps of said control unit calculating a third time period from said time point to a prescribed time point, and
said control unit calculating, based on said third time period and the number of said plurality of photovoltaic power generators, a time period in which storage of electric power should be limited in each of said photovoltaic power generators.

**7.** The power operation method according to claim 1, wherein
each of said plurality of photovoltaic power generators further includes
a battery control unit for controlling said storage of electric power and output of said electric power to said electric power system;
said step of limiting storage of electric power by said first photovoltaic power generator includes the step of the battery control unit of said first photovoltaic power generator limiting, as a part of said control unit, storage of electric power by said first photovoltaic power generator in said first time period; and
the step of limiting storage of electric power by said second photovoltaic power generator includes the step of the battery control unit of said second photovoltaic power generator limiting, as a part of said control unit, storage of electric power by said second photovoltaic power generator in said second time period.

**8.** The power operation method according to claim 7, wherein
said first time period is from sunrise to a prescribed time point; and
said second time period is from said prescribed time point to sunset.

**9.** A power operation system including a plurality of photovoltaic power generators connected to an electric power system through one same receiving end, wherein
each of said plurality of photovoltaic power generators includes
a solar cell receiving sunlight and outputting electric power, and
a storage battery for storing said electric power;
said system comprising
a limiting unit limiting storage of electric power by a first photovoltaic power generator among said plurality of photovoltaic power generators in a first time period, and limiting storage of electric power by a second photovoltaic power generator among said plurality of photovoltaic power generators in a second time period different from said first time period.

**10.** The power operation system according to claim 9, wherein
each of said plurality of photovoltaic power generators further includes
a communication interface for communication with another photovoltaic power generator, and
a battery control unit for controlling said storage of electric power and output of said electric power to said electric power system; and
the battery control unit of said first photovoltaic power generator includes said limiting unit.

**11.** The power operation system according to claim 9, wherein
each of said plurality of photovoltaic power generators further includes a battery control unit for controlling said storage of electric power and output of said electric power to said electric power system;
said power operation system further comprising:

a communication interface for communication with said battery control unit; and
a central control unit for controlling said battery control unit through said communication unit; wherein
said central control unit includes said limiting unit.

**12.** The power operation system according to claim 10 or 11, wherein
each of said plurality of photovoltaic power generators further includes
a detecting unit detecting an output value of electric power from said solar cell;
and
said limiting unit determines whether or not said solar cell outputs electric power based on said output value from said detecting unit, and
calculates said first and second time periods based on a time point when said solar cell started to output electric power.

**13.** The power operation system according to claim 10 or 11, wherein
each of said plurality of photovoltaic power generators further includes
a detecting unit detecting an output value of electric power from said solar cell;
and
said limiting unit determines whether or not said output value reached a prescribed value based on said output value from said detecting unit, and
calculates said first and second time periods based on a time point when said output value reached said prescribed value.

**14.** The power operation system according to claim 12 or 13, wherein
said limiting unit calculates a third time period from said time point to a prescribed time point, and
calculates, based on said third time period and the number of said plurality of photovoltaic power generators, a time period in which storage of electric power should be limited in each of said photovoltaic power generators.

**15.** The power operation system according to claim 9, wherein
each of said plurality of photovoltaic power generators further includes
a battery control unit for controlling said storage of electric power and output of said electric power to said electric power system, as a part of said limiting unit;
the battery control unit of a first photovoltaic power generator among said plurality of photovoltaic power generators limits storage of electric power by said first photovoltaic power generator in a first time period; and
the battery control unit of a second photovoltaic power generator among said plurality of photovoltaic power generators limits storage of electric power by said second photovoltaic power generator in a second time period.

**16.** The power operation system according to claim 15, wherein
said first time period is from sunrise to a prescribed time point; and
said second time period is from said prescribed time point to sunset.

**17.** A photovoltaic power generator connected to an electric power system through a receiving end, comprising:

a solar cell receiving sunlight and outputting electric power;
a storage battery for storing said electric power;
a communication interface for communication with another photovoltaic power generator connected to said electric power system through said receiving end; and
a control unit controlling said storage of electric power and output of said electric power to said electric power system; wherein
said control unit limits storage of electric power by said photovoltaic power generator in a first time period, and limits storage of electric power by said another photovoltaic power generator in a second time period, through said communication interface.

**18.** The photovoltaic power generator according to claim 17, further comprising
a detecting unit detecting an output value of electric power from said solar cell;

wherein
said control unit determines whether or not said solar cell outputs electric power based on said output value from said detecting unit, and
calculates said first and second time periods based on a time point when said solar cell started to output electric power.

19. The photovoltaic power generator according to claim 17, further comprising
a detecting unit detecting an output value of electric power from said solar cell;
wherein
said control unit determines whether or not said output value reached a prescribed value based on said output value from said detecting unit, and
calculates said first and second time periods based on a time point when said output value reached said prescribed value.

20. The photovoltaic power generator according to claim 18, wherein
said control unit calculates a third time period from said time point to a prescribed time point, and
calculates, based on said third time period and the number of photovoltaic power generators connected to said electric power system through a receiving end, a time period in which storage of electric power should be limited in each of said photovoltaic power generators.

21. A controller controlling a photovoltaic power generator including a solar cell receiving sunlight and outputting electric power and a storage battery for storing said electric power and connected to an electric power system through a receiving end, comprising:

a communication interface for communication with another photovoltaic power generator connected to said electric power system through said receiving end; and
a control unit controlling said storage of electric power and output of said electric power to said electric power system; wherein
said control unit limits storage of electric power by said photovoltaic power generator in a first time period, and limits storage of electric power by said another photovoltaic power generator in a second time period, through said communication interface.

22. A controller communicable to first and second photovoltaic power generators including a solar cell receiving sunlight and outputting electric power and a storage battery for storing said electric power and connected to an electric power system through one same receiving end, comprising:

a communication interface for communication with said first and second photovoltaic power generators; and
a control unit; wherein
said control unit limits storage of electric power by said first photovoltaic power generator in a first time period through said communication interface, and limits storage of electric power by said second photovoltaic power generator in a second time period, through said communication interface.

23. The controller according to claim 21, wherein
each of said photovoltaic power generators further includes
a detecting unit detecting an output value of electric power from said solar cell; and
said control unit determines whether or not said solar cell outputs electric power based on said output value from said detecting unit, and
calculates said first and second time periods based on a time point when said solar cell started to output electric power.

24. The controller according to claim 21, wherein
each of said photovoltaic power generators further includes
a detecting unit detecting an output value of electric power from said solar cell; and
said control unit determines whether or not said output value reached a prescribed value based on said output value from said detecting unit, and
calculates said first and second time periods based on a time point when said output value reached said prescribed value.

25. The controller according to claim 23, wherein
said control unit calculates a third time period from said time point to a prescribed time point, and

calculates, based on said third time period and the number of said photovoltaic power generators connected to said electric power system through said receiving end, a time period in which storage of electric power should be limited in each of said photovoltaic power generators.

FIG.1

FIG.2

FIG.3

FIG.4

AMOUNT OF
ELECTRIC POWER
SOLD(kW)

TIME

EP 2 262 077 A2

FIG.5

# FIG.6

FIG.7

## FIG.8

```
        START
          │
          ▼                      ┌S102
  START POWER GENERATION
          │                      ┌S110
  START POWER STORAGE
          │
          ▼                      ┌S118
  NO   GENERATED POWER >
  ◄─── PRESCRIBED VALUE?
          │YES                   ┌S1202
  CALCULATE REMAINING TIME
          │                      ┌S1204
  CALCULATE LIMITING TIME
          │                      ┌S122
  TRANSMIT LIMITING SIGNAL
          │
          ▼
        END
```

## FIG.9

AMOUNT OF ELECTRIC POWER SOLD(kW)

TIME

# FIG.10

| 20A BATTERY CONTROL UNIT | 20B BATTERY CONTROL UNIT | 20C BATTERY CONTROL UNIT | 20D BATTERY CONTROL UNIT |
|---|---|---|---|
| S202 START POWER GENERATION | S204 START POWER GENERATION | S206 START POWER GENERATION | S208 START POWER GENERATION |
| S210 START POWER STORAGE | S212 START POWER STORAGE | S214 STOP POWER STORAGE, START POWER SALES | S216 STOP POWER STORAGE, START POWER SALES |
| S218 STOP POWER STORAGE, START POWER SALES | S220 STOP POWER STORAGE, START POWER SALES | S222 START POWER STORAGE | S224 START POWER STORAGE |

NOON

FIG.11

AMOUNT OF ELECTRIC POWER SOLD(kW)

TIME

# FIG.12

FIG.13

FIG.14A

## FIG.14B

FIG.15

```
                    ┌─────────────┐
                    │    START    │
                    └──────┬──────┘
                           │
      ┌────────────────────▼──────────────────────┐  ⌐S518
      │     RECEIVE AMOUNT OF GENERATED POWER      │
      └────────────────────┬──────────────────────┘
                           │
                           ▼                          ⌐S528
         ╱─────────────────────────────────────╲
   NO   ╱         GENERATED POWER >              ╲
  ◄─────         PRESCRIBED VALUE?                
         ╲─────────────────────────────────────╱
                           │
                          YES
                           ▼                          ⌐S5302
      ┌───────────────────────────────────────────┐
      │         CALCULATE REMAINING TIME           │
      └────────────────────┬──────────────────────┘
                           │                          ⌐S5304
      ┌────────────────────▼──────────────────────┐
      │          CALCULATE LIMITING TIME           │
      └────────────────────┬──────────────────────┘
                           │                          ⌐S532
      ┌────────────────────▼──────────────────────┐
      │          TRANSMIT LIMITING SIGNAL          │
      └────────────────────┬──────────────────────┘
                           │
                    ┌──────▼──────┐
                    │     END     │
                    └─────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009140938 A

- JP 2003079054 A